# EUROPÄISCHE PATENTSCHRIFT

(11) **EP 2 870 666 B1**
(45) Veröffentlichungstag und Bekanntmachung des Hinweises auf die Patenterteilung: **09.10.2019**
(21) Anmeldenummer: 13720948.2
(22) Anmeldetag: 07.05.2013
(51) Int. Cl.: H01T 2/02, H01T 4/16, H01T 15/00, H02H 9/06, H02H 9/04

(54) **GEKAPSELTE, BLITZSTROMTRAGFÄHIGE UND FOLGESTROMBEGRENZENDE ÜBERSPANNUNGSSCHUTZEINRICHTUNG MIT MINDESTENS EINER FUNKENSTRECKE**
ENCAPSULATED SURGE PROTECTION DEVICE CAPABLE OF CARRYING LIGHTNING CURRENTS AND LIMITING FOLLOW CURRENTS AND COMPRISING AT LEAST ONE SPARK GAP
DISPOSITIF DE PROTECTION CONTRE LES SURTENSIONS ENTIÈREMENT FERMÉ, POUVANT SUPPORTER LES COURANTS DE FOUDRE, LIMITANT LES COURANTS DE SUITE ET COMPORTANT AU MOINS UN ÉCLATEUR

(30) Priorität: 04.07.2012 DE 102012105984; 18.12.2012 DE 102012112480
(43) Veröffentlichungstag der Anmeldung: 13.05.2015
(73) Patentinhaber: DEHN SE + Co KG, 92318 Neumarkt / Opf. (DE)
(72) Erfinder: BÜHLER, Klaus, 90542 Eckental (DE); SCHREITER, Stefanie, 92318 Neumarkt (DE); EHRLER, Jens, 92318 Neumarkt (DE); ERHARDT, Arnd, 92318 Neumarkt (DE)
(74) Vertreter: Kruspig, Volkmar
(86) Internationale Anmeldenummer: PCT/EP2013/059441
(87) Internationale Veröffentlichungsnummer: WO 2014/005747

(56) Entgegenhaltungen:
- EP-A2- 1 976 077
- WO-A1-2007/003706
- DE-A1- 10 211 795
- DE-A1-102004 002 582
- OSMOKROVIC P ET AL: "Triggered three-electrode spark gaps", 1995 PULSED POWER CONFERENCE. ALBUQUERQUE, JULY 3 - 6, 1995; [PULSED POWER CONFERENCE], NEW YORK, IEEE, US, Bd. 2, 3. Juli 1995 (1995-07-03), Seiten 822-827, XP010227771, DOI: 10.1109/PPC.1995.599713 ISBN: 978-0-7803-2791-7

## Beschreibung

Die Erfindung betrifft eine gekapselte, blitzstromtragfähige und folgestrombegrenzende Überspannungsschutzeinrichtung mit mindestens einer Funkenstrecke, welche jeweils mindestens zwei Hauptelektroden und eine Hilfselektrode aufweist, welche mit einer Zündeinrichtung zur Triggerung bei transienten Überspannungen in Verbindung steht, gemäß Oberbegriff des Anspruchs 1.

Die Anforderungen an den transienten Überspannungsschutz von Versorgungsnetzen ergeben sich aus der Normung (DIN EN 61643-11) und der Isolationskoordination (DIN EN 60664-1) bis zum Anschluss der Endgeräte. Die zusätzliche Nutzung von dezentralen Energieversorgungen bzw. von lokalen Energiespeichern führen zunehmend bereits im Normalbetrieb zu verstärkten Schwankungen der Energieversorgung. Die Anforderungen bzgl. der TOV-Festigkeit der Überspannungsschutzgeräte steigen aufgrund der veränderten Netzbedingungen kontinuierlich. Eine Aktivierung des transienten Überspannungsschutzes insbesondere bei Funkenstrecken erfolgt daher im Allgemeinen erst bei Spannungen oberhalb der verketteten Spannung des Netzes, wodurch ein stabiler Netzbetrieb bei einem ausreichenden Schutz vor transienten Überspannungen in dem Energieverteilungsnetz gegeben ist.

Fehlerbedingte temporäre Überspannungen der Netzversorgung werden bei Bedarf i.a. nach einigen 10 ms oder auch erst nach deutlich längeren Zeiten durch ansteuern der Schutzeinrichtungen des Netzes beseitigt. Dies ist für den Schutz der Anlagen der Netzversorgung i.a. ausreichend. Ein Schutz von empfindlichen Endgeräten ist mit diesen Lösungen nicht befriedigend zu gewährleisten.

Endgeräte beispielsweise verfügen zunehmend über empfindliche elektronische Komponenten, welche durch die beschriebenen Schutzmaßnahmen nur begrenzt bzw. ungenügend geschützt sind. Endgeräte besitzen häufig aktive Halbleitersteuerungen zur Regelung des Betriebsverhaltens und zur Sicherstellung einer stabilen Versorgungsspannung. Die hierbei verwendeten Bauteile beruhen zum Teil auf herstellerspezifische integrierte Schutzbeschaltungen, welche nur eine begrenzte Leistungsfähigkeit besitzen. Bei externen Störungen z.B. infolge von transienten Überspannungen werden die Netzverhältnisse, auch aufgrund der verschiedenen automatisch ablaufenden Steuervorgänge, aus Sicht eines optimalen Überspannungsschutzes für die Endgeräte problematisch. Bei dem Einsatz von schutzisolierten Geräten, der galvanischen Trennung bzw. lokalen Netzen mit verschiedenen Betriebsspannungen bzw. höheren Betriebsfrequenzen oder auch DC-Netzen wird der optimale Überspannungsschutz weiter erschwert. Eine Auswertung der anliegenden Spannung, der Ströme oder der Frequenzen ist zur Unterscheidung zwischen normalen Betriebszuständen und transienten Überspannungen aufgrund der geringen Unterschiede in solchen Netzen häufig nicht geeignet. Die üblichen Erfassungsmöglichkeiten für transiente Überspannungen erweisen sich zudem bei solchen komplexen Anforderungen für den Endgeräteschutz häufig als unzureichend. Eine eindeutige Detektion von transienten Störungen durch den üblichen Überspannungsschutz der Netzversorgung erfolgt daher häufig erst nach einer Überlastung an einem Endgerät.

Oben genannter Zustand ist insbesondere für komplexe bzw. hochwertige Endgeräte unbefriedigend. Die Anforderungen bezüglich der Schutzbedürfnisse sind zum Teil sehr individuell. Aus Sicht des Überspannungsschutzes der Netzversorgung ist jedoch keine für jedes Endgerät individuelle Lösung sinnvoll.

Die Problematik des Schutzes von gegenüber Überspannungen sensiblen Geräten ist seit langem bekannt. Die Umsetzung des Überspannungsschutzes erfolgt häufig klassisch in einem Niederspannungsversorgungsnetz in Form eines sogenannten gestaffelten Blitzschutzzonen-Konzeptes, welches z.B. in der VDE 0185 Teil 103 und Teil 106 beschrieben wird. Von der Einspeisung in Richtung Endgerät werden hierbei der Schutzpegel und die Leistungsfähigkeit der Überspannungsschutzgeräte in Stufen reduziert. Die Überspannungsschutzgeräte, welche häufig als Grob- und Feinschutz bezeichnet werden, sind untereinander durch Induktivitäten entkoppelt. Die Funktionsweise ist dabei so geregelt, dass zuerst das Feinschutzelement bei Erreichen seiner Ansprechspannung anspricht und danach mit einem Ableitstrom belastet wird. Erreicht die Summe des Restspannungsabfalls und des Spannungsabfalls über der Entkopplungsinduktivität den höheren Ansprechwert des Grobschutzelementes spricht auch dieses an und ein möglichst hoher Teilstrom wird über das Grobschutzelement abgeleitet.

Aus der DE 1 947 349 und der FR 2 544 923 sind Kombinationen von Grob- und Feinschutzelementen mit Entkopplungsinduktivitäten bekannt, wobei zusätzlich ein Überspannungsimpuls durch einen Zündübertrager zur Zündung des Grobschutzelementes beim Überschreiten eines Stromes durch das Feinschutzelement erzeugt wird.

Aus der DE 198 38 776 ist eine Anordnung bekannt, bei welcher auf Induktivitäten zwischen dem Grob- und dem Feinschutzelement verzichtet wird. Das wiederum zuerst ansprechende Feinschutzelement wird bei energiereichen Überspannungsereignissen dadurch entlastet, dass die energetische Belastung des Bauteiles beispielsweise durch eine Messung von Spannung und/oder Strom bewertet wird. Bei einem Schwellwert aktiviert eine Zündeinrichtung mit Hilfe eines Impulstransformators das vorgeordnete Grobschutzelement.

Die Erzeugung des Überspannungsimpulses für die Zündung der Grobschutzstufe geht hierbei stets von einer vorhandenen Überspannung im Netz und von einem bekannten Überlastverhalten des Feinschutzes u.a. der Strombelastbarkeit aus. Die Zündung des Grobelementes ist über die Funktionsweise der Signalgewinnung bzw. die Art der Zündimpulserzeugung stets an die Frequenz bzw. Steilheit der Störgröße gekoppelt, so dass eine reine energetische Bewertung der Störgröße nicht gelingt.

Die oben genannten Lösungen besitzen mehrere Nachteile. Die Höhe der Ansprechspannung des Feinschutzelementes wird anhand der Festlegungen entsprechend der Normung, der Herstellerempfehlung und durch Erfahrungen fixiert. Die Ansteuerung des Grobschutzelementes setzt eine gewisse Belastung des definierten Feinschutzelementes voraus und ermöglicht dadurch eine gute Koordination der üblichen Überspannungsschutzelementes in der Netzversorgung.

Bei dem Einsatz von unbekannten Feinschutzelementen in den Endgeräten sind derartige Lösungen jedoch problematisch, da die energetische Belastbarkeit der Endgeräte weder bzgl. der Peak- und Dauerspannungsfestigkeit noch der betriebsbedingten Stromhöhe beurteilt werden kann. Bei dem Übergang von der Niederspannungsnetzversorgung zu den Endgeräten kann zunehmend keine exakte Beurteilung von abnormalen Verläufen bzgl. des Stromes im Längszweig erfolgen. Die Erfassung und die Bewertung von Strömen im Querzweig sind ebenfalls problematisch. Dies betrifft sowohl deren Höhe als auch deren Frequenz. Die pauschale weitere Absenkung des Spannungsschutzpegels ist aufgrund der Normung, welche auch TOV-Spannungen beinhaltet, nur begrenzt und nur mit hohem Aufwand möglich, da aufgrund der Netzstabilität und der Alterung ein häufiges Ansprechen des Überspannungsschutzes vermieden werden sollte.

Liegt der Schutzpegel der innerhalb des Blitzschutzzonen-Konzeptes definierten Feinschutzstufe oberhalb der Peakspannungsfestigkeit von Halbleitern oder der Dauerspannungsfestigkeit von Kapazitäten, welche im Endgerät integriert sind, werden diese ohne einen erfassbaren Stromfluss zerstört. Bei dem Ansprechen von unbekannten Überspannungsschutzelementen im Endgerät sind die Höhe der Strombelastbarkeit und die zusätzliche Entkopplungsinduktivität nicht bekannt. In einer Netzversorgung ohne dezentrale Einspeisung und mit übersichtlichen Netzverhältnissen kann die Steilheit der Ströme und in begrenztem Umfang auch die Höhe der Ströme zumindest bei der Verwendung von üblichen Überspannungsschutzelement, wie GDT und Varistor für eine Beurteilung herangezogen werden. Nachteilig neben der Unsicherheit der Wahl der Kriterien ist auch, dass bei den derzeit bekannten Lösungen zur Aktivierung des Grobschutzes von Überspannungsschutzeinrichtungen, welche auch den Endgeräteschutz in kompakten Anlagen realisieren sollen, erst durch die Überspannungen eine Reaktion am Endgerät bewirkt werden muss. Bei sehr niedrigen Spannungsfestigkeiten bzw. niedrigen Ansprechspannungen gepaart mit geringer Stromtragfähigkeit z.B. bei internen Schutzdioden von Halbleiterbauelementen sind der Strom, die Spannung, die Frequenz oder daraus abgeleitete Größen unzureichend. Die bekannten Kriterien können mitunter erst ein Ansteuersignal liefern, nachdem bereits eine Überlastung des Endgerätes aufgetreten ist.

Die üblichen Kriterien, wie Höhe der Spannung, Höhe bzw. Wellenform des Stromes oder auch die energetische Belastung eines nachgeordneten Feinschutzelementes geben daher unter Umständen nur eine unzureichende Information von Anlagen bzw. über die Gefährdung von Komponenten in Endgeräten.

Bei einer weiteren Unterverteilung, bei Änderung der Frequenz, der Spannungsebene oder von dezentralen Einspeisungen sind diese üblichen Kriterien daher nahezu zwangsweise unzureichend.

Bereits bekannt ist auch der Einsatz von aktiv steuerbaren Schaltelementen zum Aktivieren von Zündeinrichtungen der Grobschutzelemente. Hierbei werden als spannungsschaltende Bauteile auch bereits Halbleiter eingesetzt. Der Einsatz dieser Bauteile in üblichen Triggereinrichtungen ist jedoch aus mehreren Gründen kritisch. Die Spannungsfestigkeit der Bauteile ist problematisch und die Ansteuerung ist mit einer Verzugszeit gekoppelt, welche bei den sehr steilen Vorgängen ohne zusätzliche und meist aufwendige Schutzmaßnahmen zur Zerstörung führt.

Bei dem Einsatz von Impulsübertragern zur Erzeugung von Zündspannungen ist aufgrund des Schaltverhaltens der Bauteile keine ausreichende Stromsteilheit möglich, wodurch nur mit viel Aufwand und zusätzlichen Energiespeichern eine ausreichende Zündspannung zur Verfügung gestellt werden kann. Neben dem spannungsschaltenden Element beinhalten die Triggerungen weitere Bauteile z.B. Varistoren, Kapazitäten etc., welche zur Koordination mit nachgeordneten Bauteilen, zur Ableitung von Störgrößen geringer Energie und zur Erfüllung von normativen Forderungen dienen. Diese Bauteile stellen die Funktionsweise bei transienten Überspannungen sicher und verhindern i.a. eine Zündung der Funkenstrecke selbst bei einer Fehlauslösung des spannungsschaltenden Elementes bei Betriebsspannung. Allein die Wahl oder die Modifizierung nur des spannungsschaltenden Elementes einer Zündeinrichtung eines konventionellen Überspannungsschutzgerätes ist daher nicht zielführend, da einerseits der Aufwand steigt und anderseits keine unabhängige und damit optimale Auslegung möglich ist.

Eine Verbesserung der Schutzwirkung ist häufig nur bei bekannten Grenzwerten der Belastbarkeit der zu schützende Geräte möglich. Eine entsprechende Anpassung der Überspannungsschutzgeräte führt zu anwendungsspezifischen Lösungen, welche für breite und allgemeinere Schutzziele jedoch ungeeignet sind. Durch die Reduzierung des Schutzpegels sinkt die TOV-Festigkeit und die Wahrscheinlichkeit für ungewollte Netzausfälle steigt. Schutzziele, welche eine Aktivierung bei Nennspannung oder unterhalb der Nennspannung erfordern, können mit bekannten Lösungsansätzen nicht verfolgt werden.

Es ist daher Aufgabe der Erfindung, ein Überspannungsschutzgerät vorzuschlagen, welches über eine zusätzliche und von dem üblichen transienten Schutz unabhängige Ansteuerung verfügt. Diese Ansteuerung soll die Aktivierung des Überspannungsschutzgerätes unabhängig von den Netzverhältnissen (Nennspannung, temporäre Überspannung, transiente Überspannung) am jeweiligen Einbauort erlauben. Die zusätzliche Ansteuerung und die übliche Grundfunktion des Überspannungsschutzgerätes sollen dabei vollständig unabhängig voneinander agieren.

Neben seiner Grundfunktion, d.h. dem transienten Überspannungsschutz, welche das normgerechte Schutzgerät mit Hilfe seiner üblichen Zündeinrichtungen realisiert, soll die zusätzliche unabhängige Aktivierungseinrichtung eine einfache Anpassung an anwendungsspezifische Schutzbedürfnisse ermöglichen. Dies führt zu einer deutlichen Verbesserung des transienten und des individuellen temporären Überspannungsschutz zum Schutz von Endgeräten selbst in galvanisch getrennten Netzen oder Netzen unterschiedlicher Nennspannung sowie Frequenz bei Eintreten oder bereits vor dem Eintreten von Überspannungsereignissen. Mit dem anzugebenden Überspannungsschutzgerät sollen zudem weitere Schutzziele verfolgt werden. Durch die zusätzliche Ansteuermöglichkeit kann die Überspannungsschutzeinrichtung beispielsweise mit internen oder externen Störlichtbogen-Erfassungseinrichtungen betrieben werden.

Die Lösung der Aufgabe erfolgt mit der Merkmalskombination nach Patentanspruch 1, wobei die Unteransprüche zweckmäßige Weiterbildungen umfassen.

Erfindungsgemäß wird eine Überspannungseinrichtung auf Funkenstreckenbasis mit einer üblichen Zündeinrichtung zur Triggerung bei transienten Überspannungen mit einer zusätzlichen Möglichkeit zur direkten Ansteuerung der Funkenstrecke ergänzt. Diese zusätzliche Möglichkeit zur Zündung der Funkenstrecke arbeitet ohne Hilfsspannung oder zusätzliche Energiespeicher und ermöglicht die Zündung der Funkenstrecke ohne das Vorhandensein von Überspannungen oder Impulsströmen.

Die zusätzliche Ansteuerung der Funkenstrecke erfolgt bevorzugt erst bei Signalgabe (externes Signal, interne Überwachung) und dem Anliegen einer Mindestspannung, welche zur sicheren und schnellen Zündung der Funkenstrecke benötigt wird.

Die Zündung der Funkenstrecke kann bei Nennspannung oder auch Unterspannung erfolgen. Die Funkenstrecke selbst ermöglicht ein schnelles und sicheres Zünden selbst bei Spannung weit unterhalb der Betriebsspannung.

Die Verzugszeit der zusätzlichen Zündeinrichtung und der Funkenstrecke sind vernachlässigbar. Als Schaltelement der zusätzlichen Ansteuerung wird bevorzugt ein Halbleiter eingesetzt. Diese zusätzliche Ansteuerung wird durch die übliche Zündeinrichtung der Überspannungseinrichtung vor transienten Überspannungsereignissen geschützt.

Die Zündeinrichtung kann mit einer weiteren Hilfselektrode innerhalb der Funkenstrecke versehen sein oder bei geeigneter Ausführung auch die Hilfselektrode der üblichen Zündeinrichtung bei transienten Überspannungen nutzen.

Durch die sehr geringe Verzugszeit der zusätzlichen Ansteuerung sind die Nutzungsmöglichkeiten nahezu ausschließlich von der Zeitdauer bis zur Signalgabe und den grundsätzlichen Eigenschaften, z.B. der Höhe der Mindestspannung zur Zündung der Funkenstrecke abhängig. Die Funktion ermöglicht eine zusätzliche Ansteuerung unabhängig von den aktuellen Belastungen am Einbauort des Schutzgerätes.

Die Ansteuerung der zusätzlichen Zündeinrichtung kann durch eine Auswerteeinheit erfolgen, welche sich im Eingangsbereich der EMV-Schutzzone, in einer nachgeordneten EMV-Schutzzone, einer anderen EMV-Schutzzone mit separater dezentraler Spannungseinspeisung oder auch unmittelbar am Einsatzort des Überspannungsschutzgerätes befinden. Darüber hinaus kann die Einrichtung über eine definierte Signalgabe von einem zu schützenden Endgerät, einer Spannungsversorgung für mehrere Endgeräte oder einem separaten Netzwerk, z.B. einem DC-Netzwerk angesteuert werden.

Durch die geringe Verzugszeit der zusätzlichen Zündeinrichtung kann selbstverständlich auch die Schutzwirkung der Einrichtung bereits bei transienten Vorgängen für empfindliche Einrichtungen verbessert werden.

Durch die funktional unabhängige Gestaltung der zusätzlichen Ansteuerung von der Grundfunktion des Überspannungsschutzgerätes kann vorteilhafterweise ein modularer Aufbau realisiert werden, welcher auch eine Nachrüstung eines Überspannungsschutzgerätes mit einer Ansteuereinheit erlaubt. Dies gestattet eine preisgünstige Fertigung des Überspannungsschutzgerätes und eine flexible Erweiterung des Funktionsumfanges einer Anlage auch noch längere Zeit nach deren Inbetriebnahme.

Der Erfindungsgedanke umfasst die Auswahl und eine entsprechende Weiterbildung einer Funkenstrecke einschließlich deren Triggerung zur Realisierung eines Überspannungsableiters als auch der zusätzlichen Ansteuerung. Die Auswahl und Abstimmung dieser Grundkomponenten bestimmen die grundsätzlichen Einsatzmöglichkeiten des Überspannungsableiters und auch die Anwendungsmöglichkeiten infolge der Funktionserweiterung.

Lösungsseitig wird eine Funkenstrecke verwendet, welche die Zündung der Entladung zwischen den Hauptelektroden unterhalb der Systemspannung des zu schützenden Gerätes/Anlage ermöglicht. Die Lichtbogenspannung zwischen den Hauptelektroden hat nach der Zündung zumindest zeitweise unterhalb der Systemspannung zu liegen. Dies ist eine grundsätzliche Bedingung zur Realisierung von Schutzfunktionen, welche ohne nennenswerte Spannungsüberhöhungen am Einbauort des Gerätes durch dessen Aktivierung angestrebt werden sollen. Überspannungsableiter mit Restspannungen bzw. Lichtbogenspannungen oberhalb der Betriebsspannung sind daher für die hier relevante Anwendung ungeeignet. Funkenstrecken mit längeren Hauptelektrodenabständen besitzen insbesondere bei Kapselung erhöhte Lichtbogenspannungen und benötigen einen erheblichen Aufwand zur Ionisation. Diese Anordnungen sind daher nur eingeschränkt und mit hohem Aufwand nutzbar.

Die minimale Netzspannung, bei der eine Funkenstrecke gezündet werden kann, wird durch mehrere Faktoren beeinflusst. Diese Mindestspannung, welche eine schnelle und sichere Zündung der Funkenstrecke gestattet, bestimmt die Einsatzmöglichkeiten der zusätzlichen Ansteuerung. Soll beispielweise ein Störlichtbogen in einer Niederspannungsanlage gelöscht werden, sollte diese Spannung kleiner als die durchschnittliche Lichtbogenspannung sein. Vorgenannte Spannung liegt im Bereich von ca. 70 V. Zum Schutz von Personen liegen die dauerhaft zulässigen Spannungen je nach Spannungsart und Frequenz in einem ähnlichen Bereich.

Um eine Funkenstrecke bei niedrigen anliegenden Spannungen zu zünden, muss eine ausreichende Ionisation zwischen den Hauptelektroden realisiert werden. Für eine erfolgreiche Zündung der Funkenstrecke ist hierzu sowohl die Intensität als auch die Zeitdauer neben der Geometrie von entscheidender Bedeutung. Funkenstrecken mit einer niedrigen Lichtbogenspannung und einem geringen lonisationsbedarf sind beispielsweise triggerbare Vakuumfunkenstrecken bzw. Gasentladungsableiter. Diese Funkenstrecken sind jedoch aufgrund der geringen Folgestrombegrenzung und des geringen Folgestromlöschvermögens für die Gesamtanwendung ungeeignet. Die einzusetzende Funkenstrecke soll zudem entsprechend dem Stand der Technik kompakt und gekapselt ausgeführt sein. Sie soll eine hohe Blitzstromtragfähigkeit und ein hohes Folgestromlöschvermögen sowie eine hohe Folgestrombegrenzung besitzen.

Für die Anwendung wird daher eine Funkenstrecke mit einer günstigen geometrischen Anordnung von Haupt- und Zündelektrode/n gewählt. Je größer der Hauptelektrodenabstand desto größer ist die erforderlich Mindestspannung für eine sichere Zündung der Anordnung und auch die Höhe der Lichtbogenbrennspannung. Diese Werte beeinflussen, wie bereits ausgeführt, die erreichbaren Schutzziele. Bei gleichen Umgebungsbedingungen, wie z.B. Gas, Gasdruck und Materialen der Funkenstrecke beeinflusst auch die geometrische Anordnung der Elektroden, die Stromführung und die Gestaltung des Entladungsraumes die Effizienz der Ladungsträgereinbringung für eine ausreichende Vorionisation. Günstig ist hierbei, eine Funkenstrecke mit einer Anordnung zu wählen, bei welcher die Ladungsträger der Vorionisation über die Hilfselektrode sich unmittelbar mit hoher Dichte und mit geringem Zeitverzug zwischen die Hauptelektroden bewegen.

Geeignete Funkenstrecken erfordern i.a. zur Realisierung einer Begrenzung und Löschung von Netzfolgeströmen zusätzliche Maßnahmen beispielsweise die Bewegung und Verlängerung des Folgestromlichtbogens.

Muss die Mindestspannung für eine erfolgreiche Zündung der Schutzeinrichtung möglichst klein sein, um beispielsweise die Anwendung Löschung eines Störlichtbogens bewirken zu können, bzw. um Maßnahmen für den Personenschutz zu unterstützen, kann eine gekapselte Funkenstrecke mit divergierenden Elektroden und einem Elektrodenabstand < 1 mm eingesetzt werden. Die Überspannungsschutzanordnung kann zur Löschung von Netzfolgeströmen mit einer Lichtbogenlöschkammer ergänzt sein. Solche Funkenstrecken sind für Netzanwendungen bei AC und DC geeignet, besitzen eine hohe Blitzimpulsstromtragfähigkeit und können in Netzen mit hohen prospektiven Folgeströmen eingesetzt werden. Bei einer Betriebsspannung von beispielsweise 230 V AC und einem prospektiven Folgestrom von 25 kA besitzt eine derartige Funkenstrecke eine hohe Folgestrombegrenzung.

Die Ionisation einer solchen Funkenstrecke kann entsprechend der geometrischen Anordnung beispielsweise so optimiert sein, dass der Aufwand zur Zündung durch Vorionisation insbesondere auch bei niedrigen treibenden Spannungen minimal ist. Darüber hinaus ist die geometrische Anordnung des Zündbereiches geeignet, mit relativ kleinen und zeitlich begrenzten Triggerströmen eine ausreichende Ionisation der Funkenstrecken und damit deren Zündung zu bewirken. Um eine erfolgreiche Triggerung dieser bevorzugten Funkenstrecke mit einer zusätzlichen Zündeinrichtung bei möglichst niedrigen treibenden Spannungen durchzuführen, ist sicherzustellen, dass eine Ionisierung infolge eines Lichtbogens in der Funkenstrecke nach dem Ansteuern des zusätzlichen Spannungsschaltelementes möglich ist.

Die oben genannte Anforderung wird dadurch gelöst, dass ein Zündversuch durch die Aktivierungseinrichtung nach Signalgabe erst ab einem entsprechend den Möglichkeiten der Anordnung festgelegten Augenblickswert der Spannung erfolgt. Durch diese Maßnahme werden mit geringem Aufwand eine hohe Zündsicherheit, eine kurze Zünddauer und eine nur kurze Beeinflussung der Netzversorgung erreicht.

Die Gesamtverzugsdauer von der Signalgabe bis zur Zündung der Funkenstrecke wird gegenüber einer dauerhaften oder repetierenden Zündung kaum verändert, da eine erfolgreiche Zündung trotz erhöhtem energetischen und schaltungstechnischen Aufwand auch erst bei Erreichen der benötigten Mindestspannung bewirkt werden kann. Bei höheren Spannungen oder temporären Spannungsüberhöhungen tritt durch diese Und-Verknüpfung kein zusätzlicher zeitlicher Verzug auf. Zündversuche unterhalb dieser Mindestspannung verbrauchen Energie bzw. verlängern die Zeit bis zur Zündung erheblich. Wird beispielweise die Aktivierungseinrichtung bei einem Wechselstromkreis im Bereich des Nulldurchganges aktiv, kann innerhalb weniger µs keine erfolgreiche Zündung nach dem Aktivierungsversuch erfolgen. Um trotzdem eine Zündung zu erreichen, muss die Zeitdauer des Zündvorganges und oder die Höhe und Dauer des Energieeintrages aufwendig erhöht werden. Ebenso könnte eine Folge von Zündversuchen mit kurzem Abstand versucht werden. Neben den Aufwand würde durch diese Maßnahmen sich auch das Verhalten der Schutzeinrichtung von einer üblichen Aktivierung unterscheiden. Durch längere oder mehrfache Aktivierung bzw. einen sehr hohen Energieeintrag würde sich das Verhalten des Ableiters beispielsweise bei Folgestrombelastung ändern, wodurch ggf. die sichere Netzversorgung gefährdet wäre.

Durch den geringen Abstand der Hauptelektroden bei einer Funkenstrecke mit divergierenden Elektroden von beispielsweise 0,5-0,8 mm und einer geringen Divergenz der Elektroden, kann über eine definierte Zeit von beispielweise einer Millisekunde eine Lichtbogenspannung von < 50 V gewährleistet werden. Die Mindestspannung kann bei dieser Schutzeinrichtung im Bereich dieser Spannung gewählt werden. Eine solche Anordnung besitzt daher beispielweise bei Nennspannung von 230 V AC eine nahezu vernachlässigbare zeitliche Lücke um den natürlichen Stromnulldurchgang in welcher eine Zündung nach internem oder externem Signal durch die Und- Verknüpfung mit der anliegenden Spannung verzögert würde.

Soll beispielsweise bei Überlastungsgefahr der Schutzeinrichtung, bei länger andauerndem Fehlerzustand oder im Interesse des angestrebten Schutzzieles, z.B. Personenschutz eine Abschaltung der Netzversorgung realisiert werden, kann durch eine dauerhafte oder mehrfache Betätigung der Aktivierungseinrichtung die Überstromschutzeinrichtung des Netzes ausgelöst werden.

Bei dieser Zielstellung ist die gleichzeitig Ansteuerung von Schalteinrichtungen des Netzes zur zeitlichen Entlastung der Schutzeinrichtung sinnvoll.

Die Zündung der Funkenstrecke der Schutzeinrichtung erfolgt dabei, wie bekannt mit mindestens einer Hilfselektrode, welche jedoch an mindestens zwei unabhängigen Zünd- bzw. Aktivierungseinrichtungen angeschlossen ist. Die erste Triggerung der Funkenstrecke entspricht einer üblichen Zündhilfe für Funkenstrecken und muss bei transienten Überspannungen selbsttätig unter Beachtung der normativen Anforderungen für Überspannungsschutzgeräte die Funkenstrecke zünden. Die zweite funktional unabhängige Zündeinrichtung besitzt ein separates aktives Schaltelement und eine Impedanz, welche einen Stromfluss bei Spannungen unterhalb der Betriebsspannung zwischen den angeschlossenen Potentialen der Funkenstrecke erlaubt. Die Zündung der Hauptfunkenstrecke erfolgt dabei über die gemeinsame oder auch eine separate Hilfselektrode und ohne Energiespeicher nahezu verzugsfrei nach Signalgabe an das Schaltelement.

Das Schaltelement der zusätzlichen Betätigungseinrichtung wird bevorzugt als aktives Halbleiterbauteil ausgeführt und kann zur Zündung der Funkenstrecke einmalig kurzzeitig, mehrmals kurzzeitig oder über längere Zeiten angesteuert werden. Der Strom durch das aktive Schaltelement verlöscht bei Zündung der Hauptfunkenstrecke i.a. selbsttätig. Der Stromfluss kann jedoch auch in der Höhe und Zeitdauer passiv oder aktiv begrenzt sein. Alternativ kann auch die Zündung der Funkenstrecke erfasst, und das aktive Schaltelement gesperrt werden.

Bei einer einmaligen Aktivierung wird die Spannung am Einbauort der Schutzeinrichtung auf die Lichtbogenspannung der Funkenstrecke reduziert. Damit erfolgt eine kurzzeitige Absenkung der Spannung auf Werte unterhalb der Netzspannung.

Durch die Absenkung können Störgrößen abgeleitet, Belastungen von Endgeräten reduziert oder vermieden bzw. auch weitere Schutzeinrichtungen aktiviert werden. Der ebenfalls entstehende Folgestrom wird anschließend durch die Funkenstrecke rasch und strombegrenzend gelöscht. Die Funktion der Funkenstrecke unterscheidet sich unabhängig von dem Pfad der Aktivierung, also der Zündung über die Triggereinrichtung für den üblichen transienten Überspannungsschutz bzw. die Zündung über die zusätzliche Zündeinrichtung mit dem zusätzlichen Spannungsschaltelement nicht bezüglich ihres Verhaltens am Netz.

Die Möglichkeit der wiederholten Zündung bzw. der Aktivierung über einen längeren Zeitraum kann zur gezielten Auslösung von separaten Schutzeinrichtungen dienen. Beispielsweise kann die aktivierte Schalteinrichtung direkt als Kurzschließer dienen oder ein passiver Kurzschließer des Überspannungsschutzgerätes durch einen erhöhten Energieeintrag angeregt werden. In beiden Fällen wird eine vorgeordnete Sicherung, Überstromschutzeinrichtung oder Fehlerstromschutzeinrichtung des Netzes direkt zum Ansprechen gebracht, wodurch in jedem Fall eine Spannungsfreischaltung der Anlage erfolgt.

Das aktive Schaltelement der separaten Ansteuereinrichtung besitzt eine Aktivierungs- bzw. Blockadespannung, welche oberhalb des Schutzpegels der Überspannungsschutzeinrichtung und insbesondere auch oberhalb der parallelen konventionellen Zündeinrichtung liegt. Die konventionelle Zündeinrichtung übernimmt im Idealfall den Überspannungsschutz für den zusätzlichen Zündkreis mit. Hierdurch wird das aktive Schaltelement vor einem fehlerhaften Verhalten oder einer Überlastung geschützt. Die konventionelle Zündeinrichtung begrenzt darüber hinaus auch den Spannungsanstieg bei steilen Vorgängen infolge der Signalerfassungs- und Verarbeitungszeit sowie der Schaltverzugszeit der separaten Ansteuereinrichtung.

Beide Zündeinrichtungen für die Funkenstrecke mit jeweils separaten Spannungsschaltelementen sind aufgrund des Aufbaus funktional vollständig unabhängig und beeinflussen sich gegenseitig nicht. Zusätzliche Anforderungen an die Funkenstrecke entstehen bei deren prinzipiellen Eignung und bei der Möglichkeit der Nutzung einer gemeinsamen Hilfselektrode ebenfalls nicht. Damit besteht die Möglichkeit, eine für den konventionellen Überspannungsschutz geeignete Schutzeinrichtung optional ohne nennenswerten Mehraufwand und ohne die Gefahr von Störungen bzw. von Funktionseinschränkungen mit einer zusätzlichen sowie sehr vielfältig nutzbaren Funktionserweiterung zu versehen.

Zur Ansteuerung des Überspannungsschutzgerätes durch die zusätzliche Zündeinrichtung mit dem separaten Spannungsschaltelement wird eine definierte Schnittstelle am Überspannungsschutzgerät nach außen geführt. Diese Schnittstelle ist beispielweise optisch ausgeführt. Für weitere oben genannte externe Ansteuermöglichkeiten kann ein zusätzlicher Adapter intern oder extern vorgesehen werden. Das Auslösesignal zur Ansteuerung kann von separaten Überwachungseinheiten oder einem Endgerät selbst geliefert werden.

Alternativ ist es insbesondere bei der bevorzugten Ausführungsform mit einer gemeinsamen Triggerelektrode möglich, die zweite Zündeinrichtung als zusätzliches separates gehäustes Teil auszuführen und als Ergänzung an die Überspannungsschutzeinrichtung mit üblicher Zündeinrichtung anzukoppeln.

Dies ermöglicht beispielweise für sehr empfindliche Geräte unter Beachtung des Schutzpegels des transienten Überspannungsschutzes eine stufenlos einstellbare Spannungsschutzkennlinie. Ebenso kann vom Betreiber der Anlage die betriebsbedingte Strombelastung eingestellt und davon abweichende Kriterien für eine Überlastungsgefahr, die zum Auslösen der Schutzeinrichtung führen, berücksichtigt werden. Diese Kriterien sind jederzeit bei einem Austausch von Betriebsmitteln bzw. der Erweiterung der Anlage an neue Erfordernisse anpassbar. Der Einsatz der Überwachungseinheit kann dabei unmittelbar an den zu schützenden Geräten oder in deren spezifischen Netzen erfolgen.

Neben der Ansteuerung zur Realisierung von Überspannungsschutzzielen im gleichen Netz oder netzübergreifend kann die separate Ansteuerung der Überspannungsschutzeinrichtung auch für andere Schutzwecke verwendet werden. Die Einrichtung kann, wie bereits beschrieben zur gezielten Abschaltung der Netzversorgung durch die mittelbare bzw. gleichzeitig unmittelbare Ansteuerungen von Überstrom- oder Fehlerstromschutzeinrichtungen genutzt werden.

Beispielsweise kann die Ansteuerung zur Löschung von Störlichtbögen genutzt werden. Durch die geringe Zündverzugszeit und die sehr geringe Lichtbogenspannung einer Funkenstrecke, welche deutlich unterhalb der üblichen Lichtbogenspannung von Störlichtbögen in Niederspannungsanlagen liegt, kommutiert der Strom aus dem Fehlerort innerhalb weniger µs in die Funkenstrecke und der Störlichtbogen verlöscht vollständig. In Niederspannungsanlagen ist die Installation nach einem Störlichtbogen mit geringer Dauer meist nicht geschädigt, so dass ein Weiterbetrieb der Anlage nach einem sogenannten "ischer" häufig problemlos möglich ist. Die Funktion der gewählten Funkenstrecke ist daher geeignet, eine Vielzahl von Störlichtbögen ohne Verlust der Spannungsversorgung im Niederspannungsbereich zu beseitigen und die Kontrolle der Anlage kann bei einer turnusmäßigen Wartung nach Meldung des Fehlers erfolgen. Die bevorzugte Funkenstrecke besitzt für eine Zeitdauer von ca. 1 ms eine Spannung von einigen 10 V, welche zur Löschung von Störlichtbögen mit Spannungen > 70 V und im Allgemeinen sogar > 150 V zum Beginn der Störung geeignet ist. Die Zeitdauer ist darüber hinaus für eine vollständige Kommutierung des Fehlerstromes in die Funkenstrecke ausreichend. Die Funkenstrecke erhöht zur Folgestromlöschung die Spannung danach nur "sanft" und minimal über die Netzspannung. In NS-Anlagen ist die Zeit für eine ausreichende Wiederverfestigung der ehemaligen Überschlagsstrecke daher gegeben. Bei stärkeren Schäden, welche durch eine kurzzeitige Kommutierung nicht beseitigt werden können, kann das Schaltelement mehrfach bzw. länger durchgesteuert werden. Sollte dies nicht zielführend sein, kann die Durchsteuerzeit bis zur Auslösung einer Überstromschutzeinrichtung erhöht werden. Die Störlichtbogenerkennung kann von externen Vorrichtungen, von separaten Überwachungseinheiten oder auch direkt im Überspannungsschutzgerät selbst erfolgen.

Die separate Ansteuerfunktion der sehr leistungsfähigen Funkenstrecke kann selbstverständlich auch von nachgeordneten Überspannungsschutzgeräten im Längs- oder Querzweig mit geringerer Leistungsfähigkeit und niedrigeren Schutzpegel aktiv genutzt werden.

Die Ansteuerung kann dabei auch von Geräten aus nachgeordneten Netzen mit anderer Frequenz, Spannungshöhe oder -art erfolgen, welche beispielweise aus dem Netz mit dem installierten Schutzgerät gespeist werden.

Die Erfindung soll nachstehend anhand von Ausführungsbeispielen und Figuren näher erläutert werden.

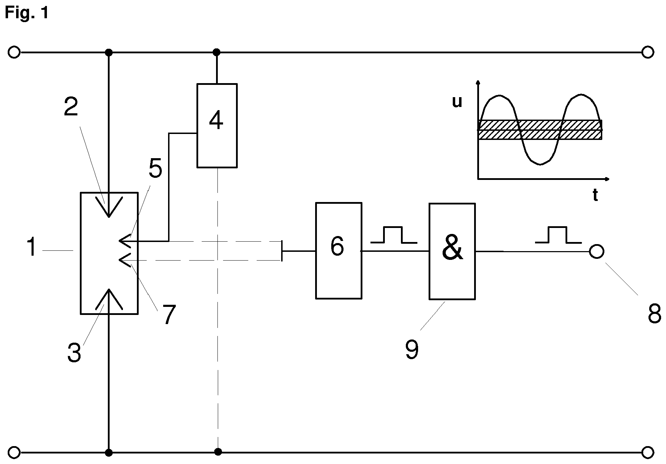

In Fig. 1 ist ein prinzipielles Blockschaltbild zur Veranschaulichung der Grundanordnung der Schutzeinrichtung dargestellt. Eine gekapselte Funkenstrecke 1 mit mindestens zwei Hauptelektroden 2 und 3 besitzt eine konventionelle Zündeinrichtung 4 für den transienten Überspannungsschutz. Die Zündung der Funkenstrecke erfolgt über die Hilfselektrode 5, mit welcher die Zündeinrichtung 4 verbunden ist. Die Anordnung erfüllt alle Anforderungen eines konventionellen Blitzstromableiters für den Einsatz in NS-Netzen.

Die Funkenstrecke 1 kann vollständig und unabhängig von der Zündeinrichtung 4 auch über die weitere Zündeinrichtung 6 aktiviert werden. Die Funkenstrecke 1 kann durch die Zündeinrichtung 6 ebenso mit Hilfe der Hilfselektrode 5 bzw. alternativ auch durch eine separate Hilfselektrode 7 aktiviert werden.

Die Aktivierung der Zündeinrichtung 6 erfordert zwingend ein Signal am Eingang 8. Bei vorliegendem Signal am Eingang 8 wird in der bevorzugten Ausführungsform nur in Kombination mit einer an der Funkenstrecke anliegenden Mindestspannung zwischen den Hauptelektroden 2 und 3 die Aktivierung der Funkenstrecke über die Einrichtung 6 ausgelöst. Die Bewertung beider Bedingungen "Signalgabe" und "Mindestspannung" erfolgt über eine Und-Verknüpfung 9 in analoger oder digitaler Art und Weise.

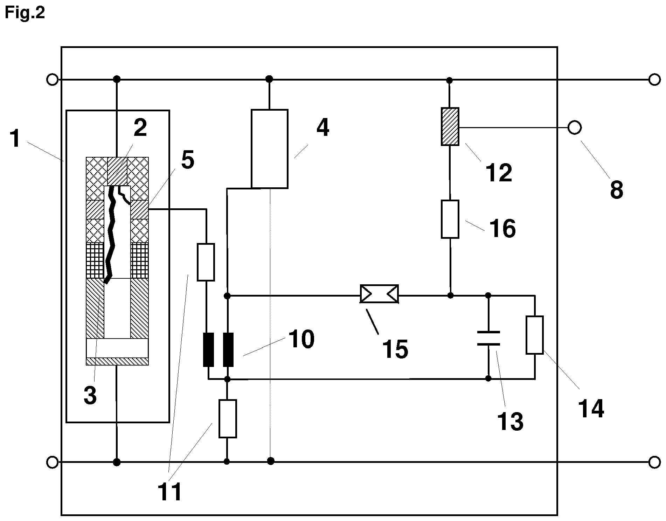

In Fig. 2 wird eine grundsätzliche Anordnung der Elektroden in einer gekapselten Funkenstrecke 1 der Überspannungsschutzeinrichtung dargestellt. Die Funkenstrecke 1 besitzt eine häufig verwendete Triggerhilfe auf der Basis eines Zündübertragers 10.

Die Funkenstrecke 1 besitzt eine oder gegebenenfalls zwei Hilfselektroden 5, welche gegenüber beiden Hauptelektroden 2; 3 isoliert sind.

Funkenstrecken mit einer solchen Triggereinrichtung werden im Allgemeinen mit einem Spannungsimpuls hoher Amplitude aus einem oder mehreren Impulsübertragern gezündet. Nach dem Überschlag der Hilfsfunkenstrecke mit dem Zündfunken zwischen den Hilfselektroden bzw. zwischen einer Hilfselektrode und einer Hauptelektrode infolge des Spannungsimpulse erfordern Niederspannungs-Luftfunkenstrecken im Gegensatz zu Anwendungen bei Hochspannung oder bei Vakuumfunkenstrecken im allgemeinen einen Stromfluss aus dem Netz über die Hochspannungswicklung des Übertragers, damit eine ausreichende Ionisationsenergie und -zeit für die Zündung der Hauptfunkenstrecke zur Verfügung steht.

Die benötigte Energie und die Zeitdauer steigen bekanntermaßen mit sinkender anliegender Spannung zwischen den Hauptelektroden. Da die grundsätzlichen Eigenschaften und auch das Verhalten einer Funkenstrecke bei der Hauptfunktion des transienten Überspannungsschutzes in starkem Maße durch die Anordnung zur Triggerung bestimmt wird, ist es nicht sinnvoll bei der Nutzung einer zusätzlichen Ansteuermöglichkeit die Art bzw. die Geometrie diese Funkenstrecken zu ändern. Die Nutzung dieser bewährten "konventionellen" Funkenstrecken mit der erfinderischen separaten Ansteuerung kann den Schutzbereich und die Schutzwirkung dieser Anordnung mit geringem Aufwand erweitern. Die Möglichkeiten zur Realisierung von zusätzlichen Schutzzielen werden bei dieser nicht optimierten Ausführung selbstverständlich durch die Grundfunktionalität der Funkenstrecke begrenzt. Zwingend notwendig ist jedoch, wie bereits beschrieben, eine zumindest zeitweilige Absenkung der Lichtbogenspannung unter die Netzspannung. Neben diesem unteren Wert wird die Nutzungsmöglichkeit durch die Zündverzugszeit, die Höhe und Dauer der Restspannung und den Lichtbogenspannungsbedarf der Funkenstrecke und der Triggerung bestimmt.

Eine Funkenstrecke mit zylindersymmetrischen Elektroden besitzt nach Fig. 2 beispielweise nur eine Triggerelektrode 5, welche bevorzugt asymmetrisch zwischen den Hauptelektroden 2 und 3 eingebracht ist. Nach der Zündung der Hilfsstrecke zwischen der Hilfsfunkenstrecke 5 und der Hauptelektrode 2 wird die Strecke zwischen den Hauptelektroden 2 und 3 gezündet. Die Ionisationsenergie ist aufgrund der allseitigen räumlichen Begrenzung und des geringen Volumens des zylinderförmigen Lichtbogenraumes zwischen den Elektroden recht gering.

Nach der Zündung des Lichtbogens zwischen den Hauptelektroden mit einer Lichtbogenspannung unterhalb der Netzspannung kann die Lichtbogenspannung u.a. durch Verlängerung des Lichtbogens innerhalb der Hohlelektrode 3 zur Folgestromlöschung und Begrenzung erhöht werden. Sind für die Anwendung auch höhere Spannungen ausreichend, bei denen eine Zündung über die externe Zündeinrichtung erfolgen muss, kann der Abstand zwischen der Zündelektrode 5 und der Hauptelektrode 3 beispielweise auch mit einem elektrisch leitenden Polymer verlängert werden, welches eine Löschung des Folgestromes beispielsweise durch Gasabgabe unterstützt. Die elektrische Leitfähigkeit und das Überschlagsverhalten des zusätzlichen Materials müssen jedoch so abgestimmt sein, dass für den Zündprozess der Hauptfunkenstrecke eine Spannung unterhalb der Nennspannung ausreichend bleibt. Für einige Anwendung können Anordnungen gewählt werden, bei denen die Zündung der Hauptstrecke beispielsweise erst ab einem Momentanwert der Spannung, welcher dem Effektivwert der Nennspannung des Netzes entspricht, ausreichend ist.

Die Zündung bei Spannungen zwischen dem Effektivwert und dem Scheitelwert der Nennspannung ist bei 230 V AC jedoch für eine sichere und schnelle Störlichtbogenlöschung unzureichend.

Die Triggerung der Funkenstrecke nach Fig. 2 erfolgt über eine konventionelle Zündhilfe 4 mit dem Zündübertrager 10. Die Polarität des Spannungsimpulses des Zündübertragers wird bevorzugt so gewählt, das der anschließende Strom aus dem Netz über die Hochspannungsseite des Übertragers keinen Nulldurchgang bedingt. Durch diese Maßnahme wird insbesondere bei niedrigen anstehenden Spannungen zwischen den Hauptelektroden 2 und 3 eine sichere Zündung gefördert. Besitzt der Übertrager selbst eine geringe Induktivität und niedrige Impedanz, ist dies günstig, insbesondere bei niedrigen Spannungen.

Zusätzliche Impedanzen 11, wie sie z.B. bei einigen Funkenstrecken mit hohen Rest- und Lichtbogenspannungen zur Begrenzung der Ströme notwendig sind, können bei der dargestellten Funkenstrecke aufgrund der niedrigen Bogenspannungen auch entfallen. Bei anderen Funkenstrecken sollten diese keine Stromunterbrechungen in dem angestrebten Bereich der zwischen den Elektroden anliegenden Spannung, bei welchen die Zündung erfolgen soll, bewirken.

Damit eine solche konventionelle Anordnung mit einer zusätzlichen Ansteuermöglichkeit, welche die Grundfunktion der Funkenstrecken sowie der transienten Zündhilfe 4 nicht beeinflusst und welche auch die Möglichkeit der späteren Ergänzung bietet, realisiert werden kann, wird die in Fig. 2 dargestellte Anordnung vorgeschlagen.

Die Primärseite des Impulsübertrager 10 wird diesbezüglich mit einem zusätzlichen Auslösekreis verbunden, welcher im Gerät oder auch bei Ausführung eines separaten Anschlusses am Gehäuse der Funkentrecke in einem separaten Gehäuse realisiert ist. Das separate Gehäuse kann nachträglich an dem Gehäuse der Funkenstrecke angebracht werden.

Der Auslösekreis beinhaltet ein aktiv spannungsschaltendes Bauteil 12 und die Möglichkeit zu dessen internen oder externen Ansteuerung 8. Nach der Betätigung der Ansteuerung wird ein Strom aus dem Netz zur Aufladung einer geringen Kapazität 13 mit Endladewiderstand 14 genutzt. Erreicht die Ladespannung der Kapazität die Spannung bei welcher ein Zündversuch der Funkenstrecke erfolgreich ist, wird durch das passive Spannungsschaltelement 15 und die Primärwicklung des Zündübertragers 10 ein Zündimpuls für die Funkenstrecke generiert.

Durch die Wahl des passiven spannungsschaltenden Elements 15 ist auch ohne Spannungsmessung gewährleistet, dass die anliegende Spannung zwischen den Hauptelektroden mindestens die Höhe der Spannung besitzt, die für die jeweilige Funkenstrecke eine sichere Zündung mit definiertem Zeitverzug ermöglicht. Diese Abstimmung zwischen der Funkenstrecke und der zusätzlichen Ansteuerung ist für die Realisierung und die Grenzen der angestrebten Schutzziele notwendig. Zur Begrenzung der Höhe bzw. auch der Dauer des Stromes durch das spannungsschaltende Bauteil 12 kann eine lineare oder nicht lineare niederohmige Impedanz 16 in Reihe geschaltet sein.

Das spannungsschaltende Element 15 ist so zu wählen, dass bei transienten Vorgängen über die die Triggerschaltung eine ausreichende Zündspannung generiert wird. Das Element 15 darf daher bei einem Stromfluss in der transienten Zündhilfe 4 entsprechend dem Stand der Technik und dem damit verbundenen Spannungsabfall über der Primärwicklung des Übertragers 10 nicht ansprechen. Die damit verbundene Spannungsreduzierung würde zu einem Energieverlust im Übertrager und zur Begrenzung der auf der Hochspannungsseite zur Verfügung stehenden Zündspannung führen. Eine Abstimmung mit Gasentladungsableitern ist mit den üblichen Übertragern durch Wahl der dynamischen Ansprechkennlinie bei unterschiedlicher Gleichansprechspannung möglich. Je nach Funkenstrecke können bei einer Netzspannung von 230 V AC Gasentladungsableiter von ca. 60 bis 350 V gewählt werden.

Die bisherigen Darlegungen gehen von einer externen Bewertung bzw. Signalgabe aus. Für einige Anwendung kann es jedoch sinnvoll sein auch innerhalb eines Schutzgerätes und somit quasi auch am gleichen Einbau - und Belastungsort eine von transienten Spannungsüberhöhungen unabhängige Auslösung zu bewirken. Neben der Bewertung von Spannungen, Strömen oder Energien können beispielsweise auch andere Störungen des Netzes erfasst und analysiert werden.

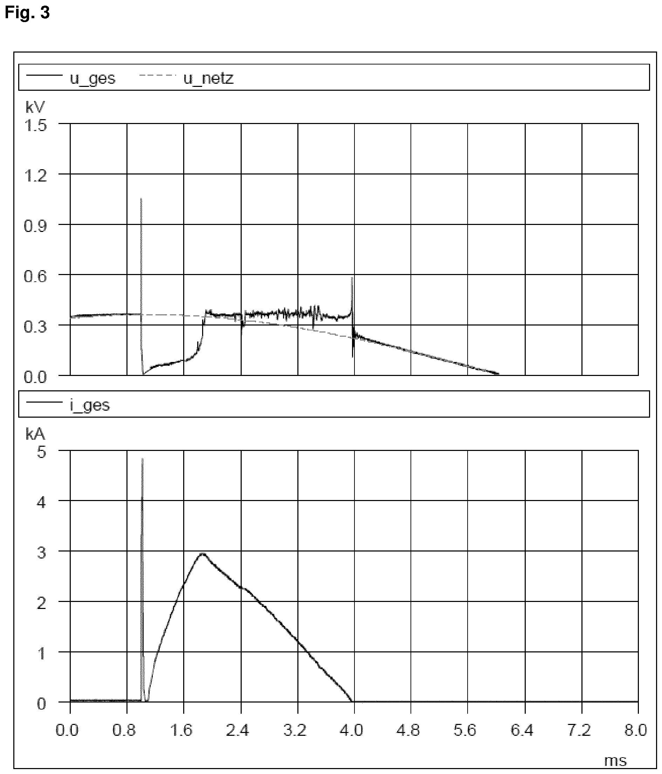

Die Fig. 3 zeigt das prinzipielle Verhalten der Überspannungsschutzeinrichtung bei einer transienten Überspannung ohne zusätzliche Ansteuerung durch eine Spannungsschalteinrichtung 12. Dieser prinzipielle Verlauf ist auch typisch für andere konventionelle Funkenstrecken mit Zündhilfen. Fig. 3 veranschaulicht das Verhalten bei einer hochaufgelösten Strom- und Spannungsmessung in einem 220 V Netz mit 50 Hz und einem Impulsereignis bei einer Phasenlage von ca. 90°. Der Impulsstrom besitzt die Wellenform 8/20 µs mit einer Amplitude von 5 kA. Der Peakwert des begrenzten Folgestromes erreicht bei einem prospektiven Wert von ca. 25 kA ca. 3 kA. Die Höhe der Spannungsüberhöhung an der Funkenstrecke beträgt in diesem Fall entsprechend der dynamischen Kennlinie des Gasentladungsableiters ca. 1 kV. Die Spannung nach der Zündung der Funkenstrecke beträgt für eine Zeitdauer von ca. 1 ms nur einige 10 V. Die Höhe und die Zeitdauer der Spannungsüberhöhung gegenüber der Netzspannung unterscheiden sich je nach Funkenstrecke und Art der Zündung. Bei den bekannten Überspannungsableitern mit einem Schutzpegel < 1,5 kV differiert sie von mehreren µs bis zur Gesamtableitdauer des Impulses.

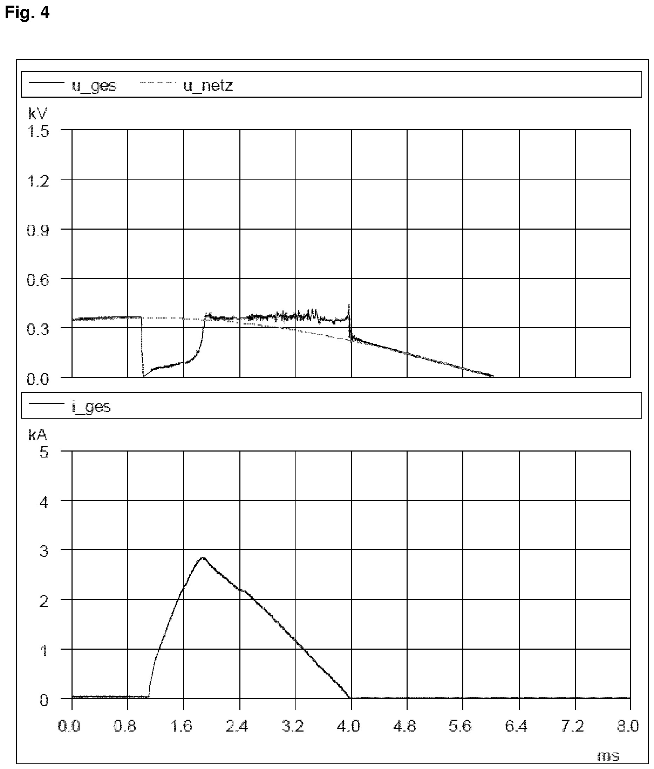

Die Fig. 4 zeigt im Gegensatz dazu die Aktivierung des Überspannungsableiters beispielsweise entsprechend Fig. 2 über die zusätzliche Spannungsschalteinrichtung 12 der separaten zusätzlichen Zündeinrichtung 6 bei Netzspannung. Die Funkenstrecke kann ohne jegliche Spannungsüberhöhung gegenüber dem Momentanwert der Netzspannung gezündet werden. Das Verhalten bei der Folgestrombegrenzung und der Folgestromlöschung ist analog dem Verlauf in Fig. 3.

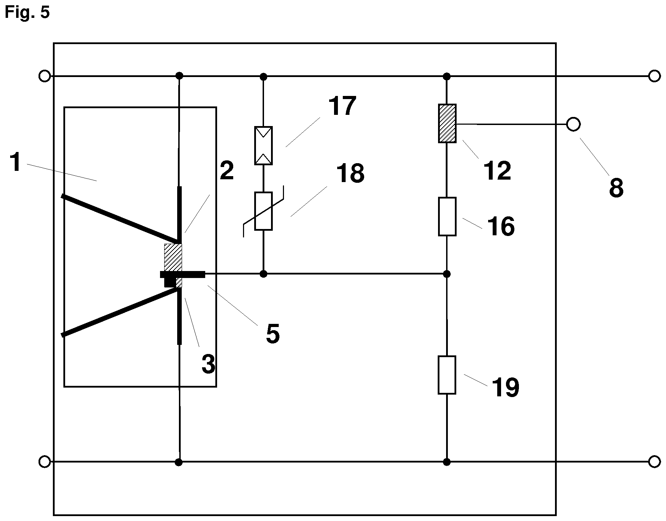

Fig. 5 zeigt eine weitere erfindungsgemäße Ausführungsform. Der gekapselte Überspannungsableiter 1 besitzt zur Ableitung von Blitzstoßströmen eine Funkenstrecke mit zwei divergierenden Hauptelektroden 2; 3, welche im Zündbereich einen Abstand von < 2 mm beispielsweise 0,8 mm besitzen, um die Lichtbogenspannung bei einer Luftstrecke auf einen Wert von < 50 V zu begrenzen. Die Funkenstrecke kann zur Begrenzung von Netzfolgeströmen mit einer Lichtbogenkammer beispielsweise einer Deionkammer (nicht dargestellt) ergänzt sein. Die Lichtbogenspannung bleibt im Zündbereich und im Laufbereich der divergierenden Elektroden auf einen niedrigen Spannungswert begrenzt. Der Lichtbogen läuft erst nach ca. 1 ms ein, wodurch die Lichtbogenspannung erst nach dieser Zeit "sanft" über die Netzspannung zur Folgestrombegrenzung und Löschung erhöht wird.

Die Funkenstrecke besitzt weiterhin eine Zündhilfe, welche bevorzugt aus einer Reihenschaltung eines Gasentladungsableiters 17 und eines Varistors 18 besteht. Die Lichtbogenspannung des Zündfunkens der Hilfsfunkenstrecke zwischen der Hilfselektrode 5 und der Hauptelektrode 3 liegt ebenfalls bevorzugt unter 50 V. Parallel zu dieser ersten Zündhilfe ist eine weitere Spannungsschalteinrichtung 12 angebracht. Beide Zündhilfen sind mit der Hilfselektrode 5 verbunden. Die Einrichtung 12 beinhaltet ein Spannungsschaltelement und eine Ansteuerschaltung, welche aktiv ausgelöst werden kann. Die Auslösung kann z.B. optisch über einen extern zugänglichen Anschluss 8 erfolgen. In Reihe zu der Einrichtung 12 kann eine lineare oder nicht lineare niederohmige Impedanz 16 angeordnet sein, welche zur Begrenzung des Stromes insbesondere bei einem leistungsschwachen Schaltelement 12 dient.

Ein hochohmiger Widerstand 19 kann die Einrichtung 12 mit dem anderen Potential verbinden. Der Widerstand kann beispielsweise zur Realisierung des Haltestromes bei der Verwendung eines Halbleiterbauteiles genutzt werden. Die Hilfeelektrode 5 ermöglicht nach dem Ansprechen einer der beiden Zündhilfen einen Stromfluss zur Hauptelektrode 3. Die Hauptfunkenstrecke zwischen den Elektroden 2; 3 zündet durch die Ionisierung sehr schnell. Aufgrund der geringen Lichtbogenspannung wird die jeweilige Zündhilfe entlastet und der Strom kommutiert auf die Hauptfunkenstrecke. Die Peakspannungsfestigkeit der Einrichtung 12 ist dabei so gewählt, dass bei transienten Überspannungen die Reihenschaltung des Gasentladungsableiters 17 und Varistors 18 als Überspannungsschutz für die Einrichtung 12 ausreichend sind. In Umgebungen, in denen mit steilen bzw. häufigen Störungen zu rechnen ist, können zusätzliche Maßnahmen ergriffen werden.

Damit preiswerte, platzsparende und leistungsarme Bauteile verwendet werden können, kann die Zeitdauer und die Höhe des Stromes über die zusätzliche Zündanordnung 12 / 16 begrenzt werden. Die Ansteuerung des Schalters 12 kann zudem durch eine Und-Verknüpfung mit dem Augenblickswert der Spannung und dem Signal am Eingang 8 geregelt sein, so dass eine erfolgreiche Zündung der Hauptfunkenstrecke durch einen einmaligen Vorgang mit geringer energetischer Belastung des Zündkreises möglich ist. Die Bewertung der Höhe der Spannung beschränkt sich hierbei auf einen Grenzwert. Dieser kann hierfür messtechnisch oder auch durch weitere spannungsschaltende Bauteile (siehe Fig. 2 Teil 15) einfach ermittelt bzw. festgesetzt werden.

Die Gesamtverzugszeit der Anordnung zur Zündung der Hauptfunkenstrecke über das Schaltelement 12 beträgt bei Anliegen des Zündsignals 8 und der notwendigen Mindesthöhe der Spannung nur wenige µs. Die Signalgabe 8 und die Bewertung der Spannungshöhe können ebenfalls innerhalb einer geringen Verzugszeit realisiert werden. Dies ermöglicht selbst innerhalb des Zeitraumes von transienten Vorgängen eine Zündung der Funkenstrecke auch über die zusätzliche Ansteuerung 12. Dies ist insbesondere dann von Interesse, wenn das zu schützende Endgerät bei transienten Überspannungen bereits unterhalb des Schutzpegels der konventionellen Überspannungsableiter beispielsweise durch energiereiche Störgrößen mit geringer Steilheit bzw. niedriger Amplitude geschädigt werden kann.

Bei einer Ausführungsform des Überspannungsschutzgerätes mit einer nachträglichen Ergänzung der zusätzlichen Ansteuerung können die Teile zur Ansteuerung 12, 8, 16, und 19 in einem separaten Gehäuse untergebracht sein. Das für die Anwendung bevorzugt gestaltete Überspannungsschutzgerät mit üblicher "konventioneller" Überspannungsschutzfunktion benötigt zur späteren Ergänzung nur eine zusätzlich ausführbare Verbindungsstelle zur vorhandenen Hilfselektrode 5. An die Schnittstelle 8 kann selbstverständlich ein Adapter (nicht dargestellt) angeschlossen werden, welcher die Nutzung unterschiedlicher Signale gestattet.

Die konkreten Anwendungsmöglichkeiten der vorgeschlagenen Schutzeinrichtung sind wie bereits erwähnt vielfältig. Es können daher nur einige nicht einschränkende Beispiele angegeben werden.

Über den Signaleingang kann beispielsweise eine externe Detektionseinrichtung für Störlichtbögen angeschlossen werden. Durch eine einmalige Aktivierung der Schutzeinrichtung können sogenannte "Wischer", wie bereits erwähnt, sehr schnell beseitigt und die Anlage kann im Gegensatz zu einfachen "Kurzschließern" weiter betrieben werden.

Bei einer erneuten Detektion kann die Schutzeinrichtung dann mehrfach bzw. dauerhaft aktiviert werden, wodurch die Überstromschutzeinrichtungen des Netzes zur Auslösung gebracht werden.

Selbstverständlich können die Detektionseinrichtungen zur Erfassung von Längs- und Querlichtbögen auch in die vorgestellte Schutzeinrichtung inklusive der separaten Auslöseeinrichtung integriert sein.

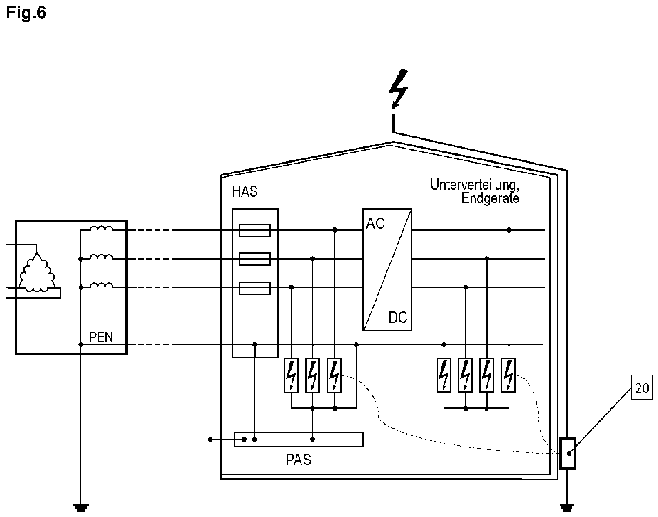

Eine weitere vorteilhafte Anwendung der erfindungsgemäßen Einrichtung ist in Fig. 6 in einer beispielhaften Anordnung dargestellt. Eine äußere Blitzfangeinrichtung kann mit einer Detektionseinrichtung 20 versehen sein. Bei der Erfassung beispielsweise eines energiereichen Entladungsvorgangs können alle Überspannungsschutzgeräte der Installation über die Schnittstelle 8 aktiviert werden. Somit ergibt sich zeitgleich eine Aktivierung aller Überspannungsschutzeinrichtungen im Allgemeinen noch vor dem Eintreten der Spannungsüberhöhung in der Installation, wodurch u.a. Endgeräte optimal vor der Beeinflussung durch transiente Überspannungen geschützt sind. Selbst bei einem Zusammentreffen von Überspannungsereignis und Aktivierung wird durch die gleichzeitige Aktivierung eine Potentialverschiebung zwischen den einzelnen Leitungen bzw. Phasen vermieden.

Die vorgeschlagene Schutzeinrichtung ermöglicht es auch, Endgeräte zu schützen, welche nur eine sehr geringe dynamische bzw. statische Spannungsfestigkeit besitzen. Endgeräte, mit Festigkeiten, bei deren Auslegung ausschließlich eine Orientierung entsprechend z.B. der ITIC-Kurve (EPRI) erfolgte, können gegenüber dem Schutzpegel, welche die üblichen normgerechten Überspannungsschutzgeräte bieten, erhebliche Abweichungen besitzen. Übliche TOV-Überwachungs- und Schutzgeräte können diese Lücke zwar bei langandauernden Überspannungen (> 10 ms) schließen, jedoch ist ein Schutz zwischen dem transienten Zeitbereich und diesen Geräten nicht gegeben.

Oben genannte Lücke kann durch die vorgestellte Lösung geschlossen werden. Vorteilhaft ist es diesbezüglich, bei der Betätigung der Aktivierungseinrichtung 6 eine gleichzeitige Signalgabe an die Schutzeinrichtung für den TOV-Schutz bzw. an die üblichen Schalteinrichtungen des Netzes vorzusehen.

Ein solches Signal kann von der Einrichtung, welche die Aktivierungseinrichtung 6 ansteuert oder auch von der vorgestellten Schutzeinrichtung selbst, gegebenenfalls nach einer weiteren zeitlich versetzten Bewertung bereitgestellt werden. Durch diese Maßnahme wird die Schutzeinrichtung bei dauerhaften Fehlern entlastet.

Die Schutzeinrichtung verfügt über eine Fernmeldung und eine Anzeigevorrichtung, welche spezifisch auf die unterschiedliche Aktivierung der Zündeinrichtungen 4 und 6 reagiert. Bei hochsensiblen Endgeräten kann die Lücke zwischen transienten Schutz und Schutz bei langandauernden erhöhten Spannungen mit einem Gerät ohne zusätzliche individuelle bzw. spezifische Schutzmaßnahmen geschlossen werden.

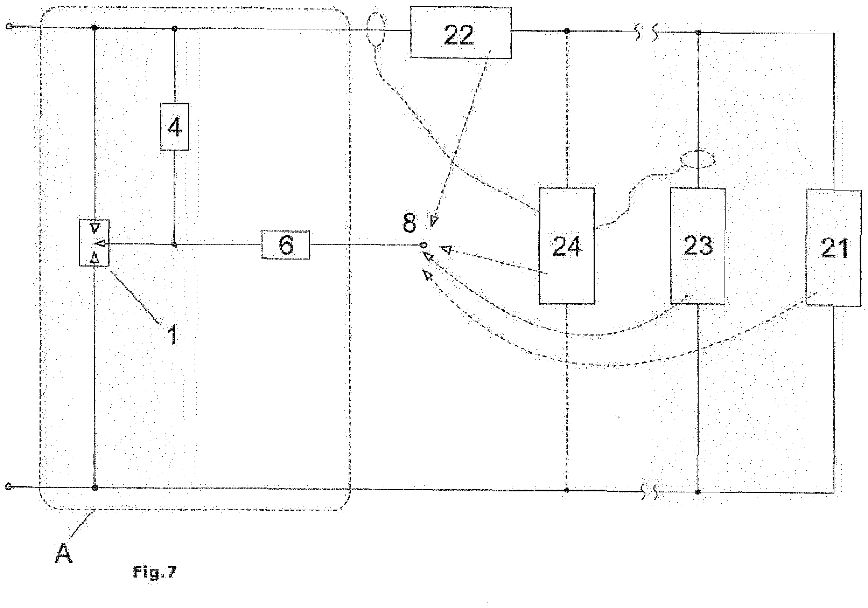

Die Fig. 7 zeigt eine Schutzeinrichtung A bestehend aus der Funkenstrecke 1, den Zündeinrichtungen 4 und 6 sowie dem Signaleingang 8 in einer einphasigen Anordnung für nachfolgend erläuterte Anwendungen.

Die Funkenstrecke 1 der Überspannungsschutzeinrichtung A wird, wie bereits dargelegt, bei transienten Spannungsüberhöhungen direkt über die konventionelle Zündeinrichtung 4 gezündet.

Die zusätzliche Zündeinrichtung 6 dient zur Zündung der Funkenstrecke über ein Signal. Die Überspannungsschutzeinrichtung A besitzt daher einen internen und /oder externen Signaleingang 8.

Eine Signalgabe kann durch interne bzw. externe Bewertungseinrichtung 24 oder durch i.a. externe Geräte 21, 22, 23 erfolgen.

Als externe Geräte sind separate Überspannungsschutzgeräte, Überwachungsgeräte oder auch Lasten, Verbraucher oder Endgeräte denkbar. Die Geräte können hierbei im Quer- oder Längszweig angeordnet sein.

Die Endgeräte 21 bzw. auch die separaten Überspannungsschutzgeräte 23 können hierbei unmittelbar benachbart oder auch selbst galvanisch getrennt von der Überspannungsschutzeinrichtung A angeordnet sein.

Die beispielhafte Anordnung in Fig. 7 zeigt neben der Überspannungsschutzeinrichtung ein Endgerät 21. Dieses Endgerät kann über eine geeignete Signalgabe an den Eingang 8 direkt die Zündung der Funkenstrecke 1 bewirken.

Im Längszweig kann ein Gerät 22 z.B. eine Strombegrenzungseinrichtung, ein PTC-Element bzw. eine passive oder aktive Längsentkopplung angeordnet sein, welche eine direkte Ansteuerung der Funkenstrecke 1 durch Signalgabe an den Signaleingang 8 bewirken kann.

Die Ansteuerung der Funkenstrecke 1 kann jedoch auch von einem nachgeordneten externen Überspannungsschutzgerät 23 durch Signalgabe erfolgen. Das Überspannungsschutzgerät 23 kann sich dabei unmittelbar benachbart, jedoch auch in einer größeren Distanz befinden. Das Überspannungsschutzgerät 23 kann zudem auch in einem galvanisch getrennten Netz oder nach einem AC/DC-Wandler angeordnet sein.

Die Ansteuerung der Funkenstrecke über den Signaleingang 8 kann z.B. bei Erreichen der Leistungsgrenze des Endgerätes 21 bzw. des Überspannungsschutzgerätes 23 erfolgen.

Zur Bewertung beispielweise der Belastung von Endgeräten 21 oder von separaten, z.B. nachgeordneten leistungsschwächeren Überspannungsschutzgeräten (SPD 2 bzw. 3) 23 kann eine Bewertungseinrichtung 24 vorgesehen sein. Diese Einrichtung kann beispielsweise Ströme und Spannungen im Längszweig an verschiedenen Knotenpunkten oder im Querzweig erfassen und bewerten. Aufgrund der Messdaten können Leistungen, Belastungen, Laständerungen etc. bewertet werden. Bei unzulässigen Werten kann durch die Bewertungseinrichtung 24 eine Ansteuerung der Funkenstrecke 1 über den Eingang 8 erfolgen.

Die Bewertungseinrichtung 24 kann als externes Gerät, als Aufsteckmodul oder auch integriert in der Überspannungsschutzeinrichtung A ausgeführt sein.

Insbesondere bei sogenannten Kombiableitern mit integrierter Grob- und Feinschutzstufe, welche zunehmend in kompakten Niederspannungsanlagen eingesetzt werden, ist es sogar sinnvoll mehrere der in Fig. 7 als extern dargestellten Komponenten ebenfalls unmittelbar in die Überspannungsschutzeinrichtung A zu integrieren.

Neben dem Überspannungsschutzgerät 23, also der Feinschutzstufe, kann eine Bewertungseinrichtung 24 und ggf. auch beispielsweise ein Gerät 22 zur Längsentkopplung, Strombegrenzung etc. integriert sein. Die Integration kann ebenfalls die für die Bewertungseinrichtung 24 benötigten Sensoren beispielweise zur Strom- und Spannungsmessung umfassen.

Die Überspannungsschutzeinrichtung A kann, wie bereits erwähnt, auch zum Störlichtbogenschutz eingesetzt werden. In der Überspannungsschutzeinrichtung kann eine Möglichkeit zur Störlichtbogendetektion vorgesehen sein, welche Längs- als auch Querfehler analysieren kann. Die Störlichtbogendetektion kann selbstverständlich auch in einem separaten Gerät erfolgen und die Überspannungsschutzeinrichtung über die Schnittstelle 8 von außen aktiviert werden. Sollte der Störlichtbogenfehler nach einmaliger oder auch mehrmaliger Aktivierung der Überspannungsschutzeinrichtung und der Löschung des Folgestromes nicht beseitigt sein, kann die Überspannungsschutzeinrichtung durch dauerhafte Ansteuerung zur Auslösung des Überstromschutzorganes des Netzes genutzt werden. Das Überstromschutzorgan kann als Sicherung oder Schalter ausgeführt sein.

Insbesondere für die Ansteuerung der Überspannungsschutzeinrichtung A über einen externen Signaleingang 8 kann einen Signaladapter (nicht dargestellt) mit verschiedenen Möglichkeiten der Signaleingabe (verschiedene Signaleingänge) vorgesehen werden.

Die Signalgabe kann beispielsweise leitungsgebunden, per Lichtwellenleiter, per Funk (drahtlos) oder über Powerline erfolgen.

### Bezugszeichenliste

- A: Schutzeinrichtung
- 1: Überspannungsschutzelement, Funkenstrecke
- 2: Hauptelektrode
- 3: Hauptelektrode
- 4: Konventionelle Zündeinrichtung
- 5: Hilfselektrode
- 6: zusätzliche Zündeinrichtung
- 7: separate Hilfselektrode
- 8: Signaleingang
- 9: Bewertungseinrichtung (Und-Verknüpfung)
- 10: Zündübertrager
- 11: Impedanz
- 12: spannungsschaltendes Bauteil (Halbleiter) mit Ansteuerung
- 13: Kapazität
- 14: Widerstand
- 15: Spannungsschaltelement (passiv, Gasentladungsableiter)
- 16: Impedanz
- 17: Gasentladungsableiter
- 18: Varistor
- 19: Widerstand
- 20: Detektionseinrichtung
- 21: Endgerät
- 22: Gerät z.B. zur Strombegrenzung, PTC bzw. passive oder aktive Längsent-kopplng
- 23: Überspannungsschutzgerät z.B. Typ SPD 2 oder 3
- 24: Bewertungseinrichtung

## Patentansprüche

1. Gekapselte, blitzstromtragfähige und folgestrombegrenzende Überspannungsschutzeinrichtung für den transienten Überspannungsschutz in Niederspannungsanlagen mit einer Funkenstrecke (1), welche jeweils mindestens zwei Hauptelektroden (2; 3) und eine Hilfselektrode (5) aufweist, wobei letztere mit einer Zündeinrichtung (4) zur Triggerung bei transienten Überspannungen in Verbindung steht,
**dadurch gekennzeichnet, dass**
mindestens eine zweite, von der ersten unabhängige Zündeinrichtung (6) vorhanden ist, welche die Funkenstrecke (1) ohne die Notwendigkeit des Vorhandenseins von Überspannungen oder Impulsströmen, jedoch dem Vorliegen einer Mindestspannung zwischen den Hauptelektroden (2; 3) der Funkenstrecke (1) aktivieren kann.

2. Überspannungsschutzeinrichtung nach Anspruch 1,
**dadurch gekennzeichnet, dass**
die zweite Zündeinrichtung (6) neben einem Aktivierungssignal (8) auch den Momentanwert der Spannung bewertet und auf der Basis einer logischen UND-Verknüpfung (9) aktivierbar ist.

3. Überspannungsschutzeinrichtung nach Anspruch 2,
**dadurch gekennzeichnet, dass**
die zweite Zündeinrichtung (6) eine Spannungsschalteinrichtung (12; 15) aufweist, welche ausschließlich durch das extern oder intern bereitgestellte oder zugeführte Signal (8) auslösbar ist.

4. Überspannungsschutzeinrichtung nach Anspruch 3,
**dadurch gekennzeichnet, dass**
die Spannungsschalteinrichtung (12; 15) der zweiten Zündeinrichtung (6) ein Halbleiterbauteil aufweist.

5. Überspannungsschutzeinrichtung nach einem der vorangegangenen Ansprüche,
**dadurch gekennzeichnet, dass**
die erste Zündeinrichtung (4) den transienten Überspannungsschutz für die zweite Zündeinrichtung (6) übernimmt.

6. Überspannungsschutzeinrichtung nach einem der vorangegangenen Ansprüche,
**dadurch gekennzeichnet, dass**
die zweite Zündeinrichtung (6) Mittel zur Strombegrenzung aufweist.

7. Überspannungsschutzeinrichtung nach einem der vorangegangenen Ansprüche,
**dadurch gekennzeichnet, dass**
diese einen Anschluss für einen Adapter zur Ansteuerung der zweiten Zündeinrichtung (6) über verschiedene externe Signale (8) aufweist.

8. Überspannungsschutzeinrichtung nach einem der Ansprüche 5 bis 11,
**dadurch gekennzeichnet, dass**
sich beide Zündeinrichtungen innerhalb eines gemeinsamen Gehäuses befinden und das Gehäuse über einen zusätzlichen Anschluss für das Aktivierungssignal (8) verfügt.

9. Überspannungsschutzeinrichtung nach einem der Ansprüche 1 bis 8,
**dadurch gekennzeichnet, dass**
nur die erste Zündeinrichtung (4) innerhalb eines mit der Funkenstrecke gemeinsamen Gehäuses befindlich ist und die zweite Zündeinrichtung (6) in einem separaten Gehäuse angeordnet ist, welches über eine Schnittstelle verfügt.

10. Überspannungsschutzeinrichtung nach einem der vorangegangenen Ansprüche,
**dadurch gekennzeichnet, dass**
mittels der zweiten Zündeinrichtung (6) die Funkenstrecke zeitlich vor dem Einlaufen einer transienten Spannungserhöhung auslösbar ist.

11. Überspannungsschutzeinrichtung nach einem der vorangegangenen Ansprüche,
**dadurch gekennzeichnet, dass**
die Funkenstrecke mittels der zweiten Zündeinrichtung (6) über externe Überwachungseinheiten (21; 22; 23; 24) unabhängig von transienten Störgrößen auslösbar ist.

## Claims

1. Encapsulated surge protection device capable of carrying lightning currents and limiting follow currents, for transient surge protection in low-voltage systems, comprising a spark gap (1) which has in each case at least two main electrodes (2; 3) and one auxiliary electrode (5), the latter being connected to an ignition device (4) for triggering in the event of transient surges, **characterized in that** at least a second ignition device (6) is provided, which is independent of the first ignition device and which can activate the spark gap (1) without requiring the presence of surges or pulse currents, but requiring a minimum voltage between the main electrodes (2; 3) of the spark gap (1).

2. Surge protection device according to claim 1, **characterized in that** the second ignition device (6) evaluates, in addition to an activation signal (8), also the instantaneous value of the voltage and can be activated on the basis of a logic AND operation (9).

3. Surge protection device according to claim 2, **characterized in that** the second ignition device (6) has a voltage-switching device (12; 15) which can be triggered exclusively by the externally or internally provided or supplied signal (8).

4. Surge protection device according to claim 3, **characterized in that** the voltage-switching device (12; 15) of the second ignition device (6) comprises a semiconductor component.

5. Surge protection device according to one of the preceding claims, **characterized in that** the first ignition device (4) takes on the transient surge protection for the second ignition device (6).

6. Surge protection device according to one of the preceding claims, **characterized in that** the second ignition device (6) has current-limiting means.

7. Surge protection device according to one of the preceding claims, **characterized in that** said surge protection device has a connection for an adapter for actuating the second ignition device (6) via various external signals (8).

8. Surge protection device according to one of claims 5 to 11, **characterized in that** the two ignition devices are located within a common housing and the housing has an additional connection for the activation signal (8).

9. Surge protection device according to one of claims 1 to 8, **characterized in that** only the first ignition device (4) is located within a housing in common with the spark gap, and the second ignition device (6) is arranged in a separate housing which has an interface.

10. Surge protection device according to one of the preceding claims, **characterized in that** the spark gap can be triggered by means of the second ignition device (6) temporally before a transient increase in voltage occurs.

11. Surge protection device according to one of the preceding claims, **characterized in that** the spark gap can be triggered by means of the second ignition device (6) via external monitoring units (21; 22; 23; 24) independently of transient disturbances.

## Revendications

1. Dispositif de protection anti-surtensions, encapsulé, susceptible de supporter le courant de foudre et limitant les courants de suite pour la protection anti-surtensions transitoires dans les installations à basse tension, comportant un éclateur (1) qui présente au moins deux électrodes principales (2 ; 3) et une électrode auxiliaire (5), cette dernière étant reliée à un dispositif d'allumage (4) pour déclencher en cas de surtensions transitoires,
**caractérisé en ce que**
il est prévu au moins un deuxième dispositif d'allumage (6) indépendant du premier, lequel peut activer l'éclateur (1) sans la nécessité de la présence de surtensions ou de courants d'impulsion, toutefois en présence d'une tension minimum entre les électrodes principales (2 ; 3) de l'éclateur (1).

2. Dispositif de protection anti-surtensions selon la revendication 1,
**caractérisé en ce que**
le deuxième dispositif d'allumage (6) évalue, en plus d'un signal d'activation (8), également la valeur instantanée de la tension et peut être activé sur la base d'une opération ET logique.

3. Dispositif de protection anti-surtensions selon la revendication 2,
**caractérisé en ce que**
le deuxième dispositif d'allumage (6) présente un dispositif de commutation de tension (12 ; 15) qui peut être déclenché exclusivement par le signal (8) mis à disposition et fourni à l'intérieur ou à l'extérieur.

4. Dispositif de protection anti-surtensions selon la revendication 3,
**caractérisé en ce que**
le dispositif de commutation de tension (12 ; 15) du deuxième dispositif d'allumage (6) présente un composant semi-conducteur.

5. Dispositif de protection anti-surtensions selon l'une des revendications précédentes,
**caractérisé en ce que**
le premier dispositif d'allumage (4) prend en charge la protection anti-surtension transitoire pour le second dispositif d'allumage (6).

6. Dispositif de protection anti-surtensions selon l'une des revendications précédentes,
**caractérisé en ce que**
le deuxième dispositif d'allumage (6) comporte des moyens pour limiter le courant.

7. Dispositif de protection anti-surtensions selon l'une des revendications précédentes,
**caractérisé en ce que**
celui-ci présente une connexion pour un adaptateur pour piloter le deuxième dispositif d'allumage (6) par divers signaux externes (8).

8. Dispositif de protection anti-surtensions selon l'une des revendications 5 à 11,
**caractérisé en ce que**
les deux dispositifs d'allumage sont situés dans un boîtier commun et le boîtier dispose d'une connexion supplémentaire pour le signal d'activation (8).

9. Dispositif de protection anti-surtensions selon l'une des revendications 1 à 8,
**caractérisé en ce que**
seul le premier dispositif d'allumage (4) se trouve dans un boîtier commun avec l'éclateur et le second dispositif d'allumage (6) est disposé dans un boîtier séparé qui présente une interface.

10. Dispositif de protection anti-surtensions selon l'une des revendications précédentes,
**caractérisé en ce que** l'éclateur peut être déclenché au moyen du deuxième dispositif d'allumage (6) avant qu'une augmentation de tension transitoire survienne.

11. Dispositif de protection anti-surtensions selon l'une des revendications précédentes,
**caractérisé en ce que**
l'éclateur peut être déclenché au moyen du deuxième dispositif d'allumage (6) par des unités de surveillance externes (21 ; 22 ; 23, 24) indépendamment de grandeurs parasites transitoires.
